# EUROPÄISCHE PATENTSCHRIFT

(11) **EP 2 329 225 B1**
(45) Veröffentlichungstag und Bekanntmachung des Hinweises auf die Patenterteilung: **03.07.2013**
(21) Anmeldenummer: 09780565.9
(22) Anmeldetag: 14.07.2009
(51) Int. Cl.: G01D 5/20

(54) **INDUKTIVER POSITIONSSENSOR, DAMIT AUSGESTATTETES MESSSYSTEM UND VERFAHREN ZUM BETRIEB EINES POSITIONSSENSORS**
INDUCTIVE POSITION SENSOR, MEASURING SENSOR FITTED THEREWITH AND METHOD FOR OPERATING A POSITION SENSOR
CAPTEUR DE POSITION INDUCTIF, SYSTÈME DE MESURE ÉQUIPÉ DE CE CAPTEUR ET PROCÉDÉ POUR FAIRE FONCTIONNER UN TEL CAPTEUR DE POSITION

(30) Priorität: 11.09.2008 DE 102008046741
(43) Veröffentlichungstag der Anmeldung: 08.06.2011
(73) Patentinhaber: Dr. Johannes Heidenhain GmbH, 83301 Traunreut (DE)
(72) Erfinder: TIEMANN, Marc, Oliver, A-5020 Salzburg (AT)
(86) Internationale Anmeldenummer: PCT/EP2009/058989
(87) Internationale Veröffentlichungsnummer: WO 2010/028883

(56) Entgegenhaltungen:
- DE-A1- 19 751 853

## Beschreibung

Die Erfindung betrifft einen induktiven Positionssensor zur Bestimmung von Relativpositionen gemäß dem Oberbegriff des Anspruchs 1 und ein Verfahren zum Betrieb eines induktiven Positionssensors gemäß dem Oberbegriff des Anspruchs 7. Weiterhin betrifft die Erfindung ein Messsystem, das mit einem induktiven Positionssensor ausgestattet ist, gemäß dem Anspruch 13.

Induktive Positionssensoren werden beispielsweise als Drehgeber zur Bestimmung der Winkellage zweier relativ zueinander drehbaren Maschinenteile verwendet. Bei induktiven Positionssensoren sind Erregerspulen und Empfängerspulen etwa in Form von Leiterbahnen auf einer gemeinsamen Leiterplatte aufgebracht, die beispielsweise mit einem Stator eines Drehgebers fest verbunden ist. Dieser Leiterplatte gegenüber befindet sich eine weitere Platine, die nicht selten als Teilscheibe ausgebildet ist, auf der in periodischen Abständen alternierend elektrisch leitfähige und nichtleitfähige Flächen als Teilungsbereich bzw. Teilungsstruktur aufgebracht sind, und welche mit dem Rotor des Drehgebers drehfest verbunden ist. Wenn an den Erregerspulen ein zeitlich wechselnder elektrischer Erregerstrom angelegt wird, werden in den Empfängerspulen während der Relativdrehung zwischen Rotor und Stator von der Winkellage abhängige Signale erzeugt. Diese Signale werden dann in einer Auswerteelektronik weiterverarbeitet.

Ferner werden induktive Positionssensoren häufig auch zur direkten Messung von Längsverschiebungen entlang einer Achse verwendet. Dabei wird das gleiche Messprinzip angewendet wie bei den oben genannten Drehgebern, allerdings verlaufen dann die Empfängerspulen und die Teilungsstruktur entlang der geradlinigen Achse.

Häufig werden derartige induktive Positionssensoren als Messgeräte für elektrische Antriebe, zur Bestimmung der Relativbewegung bzw. der Relativlage von entsprechenden Maschinenteilen, eingesetzt. In diesem Fall werden die Positionswerte, welche von den Positionssensoren erzeugt werden, einer Folgeelektronik zur Ansteuerung der Antriebe über eine entsprechende Schnittstellenanordnung zugeführt. Eine derartige Konfiguration, bestehend aus Positionssensor, Schnittstellenanordnung und Folgeelektronik, wird als Messsystem bezeichnet.

Es besteht in vielen Einsatzbereichen derartiger Positionssensoren bzw. Messsysteme permanent der Wunsch, dass diese sicherheitstechnischen Anforderungen genügen. Häufig muss es möglich sein, dass sich Personen innerhalb eines Schwenkbereichs von Maschinenteilen, deren Antriebe mit dem Messsystem zusammenwirken, aufhalten dürfen. Unter diesen Voraussetzungen muss ausgeschlossen sein, dass diese Personen durch Fehler im Messsystem in Gefahr geraten. Entsprechend sollte selbstredend zugleich vermieden werden, dass Sachgüter in der Nähe der bewegten Maschinenteile beschädigt werden könnten.

In der DE 197 51 853 A1 der Anmelderin wird ein induktiver Positionssensor beschrieben, bei dem die Empfängerspulen innerhalb einer Spur mit einem Versatz angeordnet sind, der eine 90°-Phasenverschiebung der empfangen Signale bewirkt. Ein Ausfall einer Empfängerspule oder ein Fehler in der Auswerteelektronik würde im Allgemeinen nicht entdeckt werden.

Aus der Offenlegungsschrift JP 2004 205456 A1 ist ein inkremrentaler Encoder beschrieben, der drei um 120° phasen-verschobene Signale erzeugt. Ein entsprechender Encoder genügt jedoch nicht höheren sicherheitstechnischen Anforderungen.

Der Erfindung liegt daher die Aufgabe zugrunde, einen induktiven Positionssensor bzw. ein entsprechendes Messsystem zu schaffen, durch welchen bzw. durch welches hohe sicherheitstechnische Anforderungen erfüllbar sind.

Ebenso wird durch die Erfindung ein Verfahren geschaffen, welches einen sicheren Betrieb eines entsprechenden Positionssensors ermöglicht.

Diese Aufgabe wird erfindungsgemäß durch die Merkmale des Anspruches 1 bzw. des Anspruches 7 oder 13 gelöst.

Der erfindungsgemäße induktive Positionssensor umfasst eine Abtastleiterplatte, auf der eine Erregerleiterbahn zur Erzeugung eines elektromagnetischen Feldes und eine (erste) Empfängerspur mit mehreren Empfängerleiterbahnen angeordnet sind. Weiterhin umfasst der Positionssensor ein Teilungselement, welches relativ zur Abtastleiterplatte verschieblich oder drehbar ist und eine Teilungsspur aufweist, die aus alternierend angeordneten, elektrisch leitfähigen und nichtleitfähigen Teilungsbereichen besteht. Darüber hinaus umfasst der Positionssensor eine elektronische Schaltung. Die Empfängerspur ihrerseits weist zumindest drei Empfängerleiterbahnen auf, welche so angeordnet sind, dass bei einer Relativbewegung - z. B. einer Relativdrehung - zwischen dem Teilungselement und der Abtastleiterplatte in den Empfängerleiterbahnen der Empfängerspur Signale detektierbar sind, wobei eine Phasenverschiebung zumindest zwischen einem Paar dieser Signale von n·90° abweicht, mit n als natürlicher Zahl, wobei insbesondere die Zahl 0 nicht der Menge der natürlichen Zahlen zuzuordnen ist. Die elektronische Schaltung ist so konfiguriert, dass aus den von den Empfängerleiterbahnen der (ersten) Empfängerspur detektierten Signalen zunächst drei digitale Signale erzeugbar sind, und durch Kombination der drei digitalen Signale zumindest zwei Positionswerte ermittelbar sind, als Maß für die Relativbewegung zwischen dem Teilungselement und der Abtastleiterplatte. Die Positionswerte sind einem Vergleicher zuführbar, zur Überprüfung der Funktionstüchtigkeit des Positionssensors.

Das Teilungselement ist also relativ zur Abtastleiterplatte verschieblich oder drehbar, so dass eine entsprechende Relativbewegung erfolgen kann. Die Relativbewegung kann eine Drehbewegung sein oder eine lineare Bewegung. Entsprechend können durch die Positionswerte eine Winkelstellung oder eine translatorische Stellung dargestellt werden.

Unter Phasenverschiebungen sind hier Phasenverschiebungen, bzw. elektrische Phasenversätze, der Nutzsignale zu verstehen, wobei die Nutzsignale eine wesentlich niedrigere Frequenz aufweisen als der Erregerstrom in den Erregerspulen. Sinnvollerweise wird die Phasenverschiebung in einem Bereich von 0° bis 360° angegeben. Die Phasenverschiebung zwischen zumindest einem Paar dieser Signale ist dergestalt, dass die Signale eine lineare Abhängigkeit zueinander aufweisen.

Unter Kombination der drei Signale ist auf Grund des Vorliegens der betreffenden drei Signale in digitaler Form eine Verrechnung dieser Signale bzw. eine Durchführung eines Berechnungsalgorithmus auf Basis der drei Signale als Input-Daten zu verstehen.

Die ermittelbaren Positionswerte basieren auf Signalen, die von unterschiedlichen Empfängerleiterbahnen herrühren, wobei die Signale der jeweiligen Empfängerleiterbahnen auf voneinander unabhängigen Singalpfaden durch die elektronische Schaltung leitbar sind. Die digitalen Positionswerte sind demnach insofern unabhängig voneinander, als dass diese von unterschiedlichen Empfängerleiterbahnen bzw. unterschiedlichen Kombinationen von Empfängerleiterbahnen herrühren und in der Schaltung unabhängig voneinander verarbeitet oder ermittelt wurden, bzw. ermittelbar sind.

In vorteilhafter Ausgestaltung der Erfindung liegt die elektronische Schaltung in einem ASIC-Baustein vor.

Mit Vorteil ist der induktive Positionssensor so ausgestattet, dass auf der Abtastleiterplatte die erste Empfängerspur und eine zweite Empfärlgerspur mit mehreren Empfängerleiterbahnen angeordnet sind. Das Teilungselement umfasst dabei dann die erste Teilungsspur und eine zweite Teilungsspur, wobei der Positionssensor so konfiguriert ist, dass bei gleicher Relativbewegung zwischen der Abtastleiterplatte und dem Teilungselement durch die Empfängerleiterbahnen der ersten Empfängerspur eine geringere Anzahl von Signalperioden erzeugbar ist als durch die Empfängerleiterbahnen der zweiten Empfängerspur. Unter gleicher Relativbewegung sind Relativbewegungen gleicher Größe zu verstehen, beispielsweise eine Relativdrehung um ein bestimmtes Winkelmaß oder eine Längsverschiebung um ein bestimmtes Längenmaß. Selbstverständlich kann der induktive Positionssensor auch so ausgestaltet sein, dass mehr als zwei Empfängerspuren und mehr als zwei Teilungsspuren vorgesehen sind.

In weiterer Ausgestaltung der Erfindung ist die elektronische Schaltung des induktiven Positionssensors so konfiguriert, dass die Positionswerte einem Mittelwertbildner zuführbar sind, wobei der Mittelwertbildner ein Teil der elektronischen Schaltung ist.

Weiterhin kann die elektronische Schaltung so konfiguriert sein, dass aus den von den Empfängerleiterbahnen der zweiten Empfängerspur detektierten Signalen zunächst drei digitale Signale erzeugbar sind, wobei durch Kombination der drei digitalen Signale zumindest zwei Positionswerte ermittelbar sind. Die Positionswerte können dann einem Mittelwertbildner zuführbar sein.

Mit Vorteil ist die elektronische Schaltung so konfiguriert, dass der durch den Mittelwertbildner erzeugte Mittelwert einem Vergleichselement zuführbar ist.

In vorteilhafter Ausgestaltung der Erfindung kann der induktive Positionssensor so konfiguriert sein, dass bei einer Relativbewegung zwischen dem Teilungselement und der Abtastleiterplatte in den Empfängerleiterbahnen der Empfängerspur Signale detektierbar sind, deren Phasenverschiebungen jeweils 60° oder 120° betragen.

Beim erfindungsgemäßen Verfahren zum Betrieb des induktiven Positionssensors werden zunächst bei einer Relativbewegung zwischen dem Teilungselement und der Abtastleiterplatte in den Empfängerleiterbahnen der Empfängerspur Signale detektiert, wobei eine Phasenverschiebung zumindest zwischen einem Paar dieser Signale von n·90° abweicht, mit n als natürlicher Zahl. Durch eine elektronische Schaltung werden dann aus den von den Empfängerleiterbahnen der Empfängerspur detektierten Signalen zunächst drei digitale Signale erzeugt. Die drei digitalen Signale werden sodann derart kombiniert, dass zumindest zwei digitale Positionswerte ermittelt werden. Dann werden die Positionswerte miteinander verglichen, wobei bei einer Abweichung der Positionswerte, die einen vorgegebenen Grenzwert überschreitet, eine Fehlermeldung ausgelöst wird.

Das Vergleichen der Abweichung der Positionswerte mit einem vorgegebenen Grenzwert kann im Positionssensor selbst vorgenommen werden und /oder in einer Folgeelektronik, an welche die Positionswerte vom Positionssensor zuvor übertragen wurden.

Mit Vorteil sind auf der Abtastleiterplatte die erste Empfängerspur und eine zweite Empfängerspur mit mehreren Empfängerleiterbahnen angeordnet, wobei das Teilungselement die erste Teilungsspur und eine zweite Teilungsspur umfasst. Bei dieser Anordnung werden dann bei gleicher Relativbewegung zwischen der Abtastleiterplatte und dem Teilungselement durch die Empfängerleiterbahnen der ersten Empfängerspur eine geringere Anzahl von Signalperioden erzeugt als durch die Empfängerleiterbahnen der zweiten Empfängerspur. Bei der genannten Anordnung kann dann auch bei gleicher Relativbewegung zwischen der Abtastleiterplatte und dem Teilungselement durch die Empfängerleiterbahnen der ersten Empfängerspur eine ungerade Anzahl von Signalperioden erzeugt werden und durch die Empfängerleiterbahnen der zweiten Empfängerspur eine gerade Anzahl, bzw. umgekehrt.

In weiterer Ausgestaltung der Erfindung werden Positionswerte einem Mittelwertbildner zugeführt. Insbesondere können bei dem Verfahren in der elektronischen Schaltung aus den von den Empfängerleiterbahnen der zweiten Empfängerspur detektierten Signalen zunächst drei digitale Signale erzeugt werden, wobei durch Kombination der drei digitalen Signale zumindest zwei Positionswerte ermittelt werden. Die Positionswerte werden dann einem Mittelwertbildner zugeführt, zur Bestimmung eines entsprechenden Mittelwertes. Der durch den Mittelwertbildner erzeugte Mittelwert kann einem Vergleichselement zugeführt werden.

Gemäß einem weiteren Aspekt betrifft die Erfindung ein Messsystem, das den Positionssensor und weiterhin eine Datenschnittstelle sowie eine Folgeelektronik umfasst. Die Folgeelektronik umfasst ihrerseits den Vergleicher, wobei dem Vergleicher zumindest zwei Positionswerte über die Datenschnittstelle zuführbar sind. Die Datenschnittstelle umfasst mit Vorteil eine Schnittstellenschaltung, beispielsweise einen entsprechenden Schnittstellenbaustein am Positionssensor, ein Kabel zur Übertragung der Positionswerte, sowie eine Schnittstellenschaltung, bzw. einen Schnittstellenbaustein in der Folgeelektronik. Alternativ können die Positionswerte auch kabellos übertragen werden, so dass dann die Datenschnittstelle an Stelle des Kabels ein entsprechendes Sender- und Empfängerelement aufweist.

In weiterer Ausgestaltung des erfindungsgemäßen Messsystems ist durch die Folgeelektronik eine Fehlermeldung ausgebbar, wenn eine Abweichung der Positionswerte einen vorgegebenen Grenzwert überschreitet. Die Fehlermeldung kann mit Vorteil direkt eine automatische Stillsetzung der mit dem Messsystem, bzw. mit der Folgeelektronik, verbundenen Maschine auslösen. Die Fehlermeldung kann ergänzend dann auch zu Diagnosezwecken etwa an einem Bildschirm ausgegeben werden.

Mit Vorteil umfasst das Messsystem einen induktiven Positionssensor mit einer Abtastleiterplatte, auf welcher die erste Empfängerspur und eine zweite Empfängerspur mit mehreren Empfängerleiterbahnen angeordnet sind, sowie ein Teilungselement, das die erste Teilungsspur und eine zweite Teilungsspur aufweist. Dabei ist bei gleicher Relativbewegung zwischen der Abtastleiterplatte und dem Teilungselement durch die Empfängerleiterbahnen der ersten Empfängerspur eine geringere Anzahl von Signalperioden erzeugbar als durch die Empfängerleiterbahnen der zweiten Empfängerspur. Ferner sind die aus den Signalen der Empfängerleiterbahnen erzeugten digitalen Positionswerte in der Folgeelektronik zu einem Positionswert kombinierbar.

Vorteilhafte Ausbildungen der Erfindung entnimmt man den abhängigen Ansprüchen.

Weitere Einzelheiten und Vorteile des efindungsgemäßen induktiven Positionssensors, des Verfahrens zum Betrieb eines induktiven Positionssensors, sowie des mit dem Positionssensor ausgestatteten Messsystems ergeben sich aus der nachfolgenden Beschreibung eines Ausführungsbeispiels anhand der beiliegenden Figuren.

Es zeigen die
- Figur 1: eine Draufsicht auf eine Teilscheibe,
- Figur 2: eine Draufsicht auf eine Abtastleiterplatte,
- Figur 3: eine schematische Darstellung der Funktion einer elektronischen Schaltung eines Messsystems mit dem Positionssensor,
- Figuren 4a-d: Signalverläufe, wie sie im Positionssensor auftreten,
- Figur 5: einen Querschnitt durch einen induktiven Positionssensor.

Im vorgestellten Ausführungsbeispiel wird die Erfindung anhand eines Messsystems beschrieben, welches einen rotatorischen induktiven Positionssensor umfasst sowie eine Schnittstelle 5 zur Datenübertragung und eine Folgeelektronik 4.

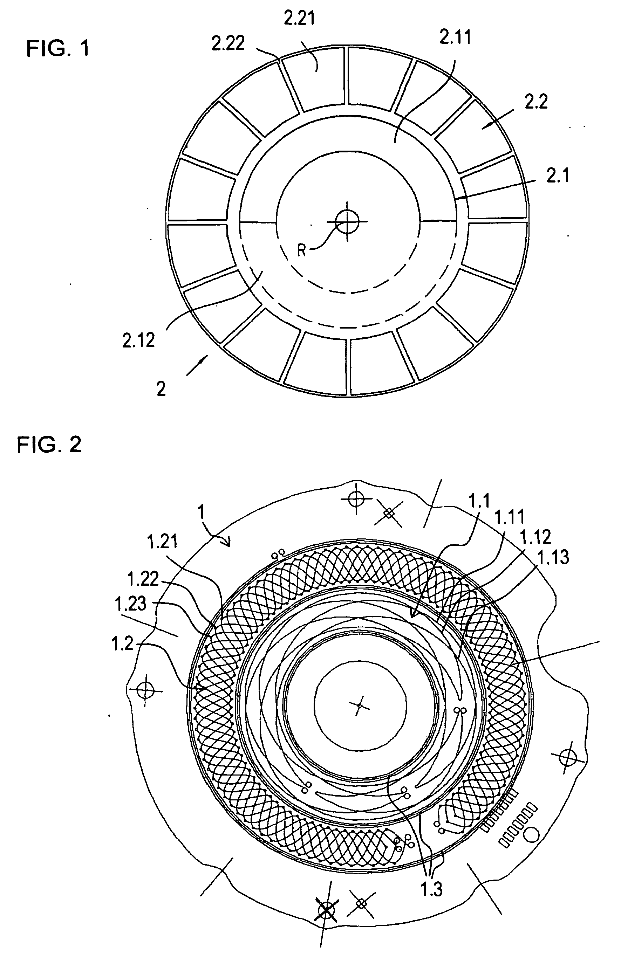

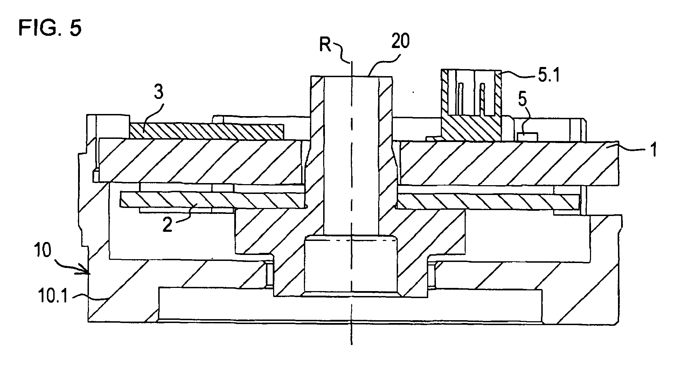

In den Figuren 1, 2 und 5 ist der prinzipielle Aufbau eines Positionssensors gezeigt. Gemäß der Figur 5 weist der Positionssensor einen Rotor und einen Stator auf. Im vorgestellten Ausführungsbeispiel umfasst der Rotor eine Welle 20, welche beispielsweise an einer zu messenden Motorwelle drehfest montiert werden kann. An einem Absatz der Welle 20 ist zur Erfassung ihrer Winkellage ein Teilungselement in Form einer ringförmigen Teilscheibe 2 mit - in der Figur 5 nicht dargestellten - Teilungsspuren 2.1, 2.2 drehfest festgelegt.

Der Stator umfasst ein Gehäuse 10, an dem als Trägerkörper eine ringförmige Abtastleiterplatte 1 befestigt ist. Auf der Abtastleiterplatte 1 ist ein ASIC-Baustein 3, in welchem sich eine elektronische Schaltung befindet, montiert. Der ASIC-Baustein 3 dient unter anderem als Auswerteelement. Femer sind auf der Abtastleiterplatte 1 ein Schnittstellenbaustein 5 und ein Steckverbinder 5.1 montiert. Der Rotor und der Stator, bzw. die Welle 20 und das Gehäuse 10 sind um eine Drehachse R relativ zueinander drehbar.

In der Figur 1 ist die Teilscheibe 2 gezeigt. Diese besteht aus einem Substrat 2.3, welches im dargestellten Ausführungsbeispiel aus Epoxydharz hergestellt ist, und auf welchem zwei Teilungsspuren 2.1, 2.2 angeordnet sind. Die Teilungsspuren 2.1, 2.2 sind kreisförmig ausgebildet und bezüglich einer Drehachse R konzentrisch mit unterschiedlichem Durchmesser auf Substrat 2.3 angeordnet. Die beiden Teilungsspuren 2.1, 2.2 bestehen jeweils aus einer periodischen Abfolge von alternierend angeordneten elektrisch leitfähigen Teilungsbereichen 2.11, 2.21 und nichtleitfähigen Teilungsbereichen 2.12, 2.22. Als Material für die elektrisch leitfähigen Teilbereiche 2.11, 2.21 wurde im gezeigten Beispiel Kupfer auf das Substrat 2.3 aufgebracht. In den nichtleitfähigen Teilungsbereichen 2.12, 2.22 wurde das Substrat 2.3 dagegen nicht beschichtet.

Die innere Teilungsspur 2.1 besteht in der dargestellten Ausführungsform aus einem ersten halbkreisförmigen Teilungsbereich 2.11 mit elektrisch leitfähigem Material, hier Kupfer, sowie einem zweiten halbkreisförmigen Teilungsbereich 2.12, in dem kein leitfähiges Material angeordnet ist.

Radial benachbart zur ersten Teilungsspur 2.1 liegt die zweite Teilungsspur 2.2 auf dem Substrat 2.3, wobei auch die zweite Teilungsspur 2.2 aus einer Vielzahl elektrisch leitfähiger Teilungsbereiche 2.21 sowie dazwischen angeordneten nichtleitfähigen Teilungsbereichen 2.22 besteht. Die verschiedenen Teilungsbereiche 2.21, 2.22 sind materialmäßig dabei ebenso ausgebildet wie die Teilungsbereiche 2.11, 2.12 der ersten Teilungsspur 2.1. Insgesamt umfasst die zweite Teilungsspur 2.2 im dargestellten Ausführungsbeispiel sechzehn periodisch angeordnete, elektrisch leitfähige Teilungsbereiche 2.21 sowie entsprechend sechzehn dazwischen angeordnete nichtleitfähige Teilungsbereiche 2.22.

Die in Figur 2 gezeigte zur Abtastung der Teilscheibe 2 vorgesehene Abtastleiterplatte 1 umfasst als Empfängerspulen in einer inneren Empfängerspur 1.1 drei Empfängerleiterbahnen 1.11, 1.12, 1. 13 und in einer äußeren Empfängerspur 1.2 weitere drei Empfängerleiterbahnen 1.21, 1.22, 1.23. Die zusammengehörigen Tripel der Empfängerleiterbahnen 1.11, 1.12, 1. 13; 1.21, 1.22, 1.23 einer jeweiligen Empfängerspur 1.1, 1.2 sind hierbei relativ zueinander versetzt, hier insbesondere gleichmäßig zueinander versetzt.

Darüber hinaus sind als Erregerspulen an der Abtastleiterplatte 1 die Erregerleiterbahnen 1.3 vorgesehen, welche auf einer inneren, einer mittleren und einer äußeren Erregerspur aufgebracht sind. Die Abtastleiterplatte 1 selbst weist eine zentrische Bohrung auf und ist mehrlagig ausgeführt.

Im zusammengebauten Zustand des Positionssensors stehen sich die Teilscheibe 2 und die Abtastleiterplatte 1 gegenüber, so dass die Drehachse R durch die Mittelpunkte beider Elemente verläuft und bei einer Relativdrehung zwischen Teilscheibe 2 und Abtastleiterplatte 1 in der Abtastleiterplatte 1 ein von der jeweiligen Winkelstellung abhängiges Signal durch Induktionseffekte erzeugbar ist.

Vorraussetzung für die Bildung von entsprechenden Signalen ist, dass die Erregerleiterbahnen 1.3 ein zeitlich wechselndes elektromagnetisches Erregerfeld im Bereich der Empfängerspuren 1.1, 1.2 bzw. im Bereich der damit abgetasteten Teilungsspuren 2.1 und 2.2 erzeugen. Im dargestellten Ausführungsbeispiel sind die Erregerleiterbahnen 1.3 als mehrere plan-parallele, Strom durchflossene Einzel-Leiterbahnen ausgebildet. Werden die Erregerleiterbahnen 1.3 einer Leiterbahneinheit allesamt in der gleichen Richtung von Strom durchflossen, so bildet sich um die jeweilige Leiterbahneinheit ein schlauch- bzw. zylinderförmig orientiertes elektromagnetisches Feld aus. Die Feldlinien des resultierenden elektromagnetischen Feldes verlaufen in Form konzentrischer Kreise um die Leiterbahneinheiten, wobei die Richtung der Feldlinien in bekannter Art und Weise von der Stromrichtung in den Leiterbahneinheiten abhängt.

Die Stromrichtung der unmittelbar an eine gemeinsame Empfängerspur 1.1, 1.2 angrenzenden Leiterbahneinheiten bzw. die entsprechende Verschaltung dieser Leiterbahneinheiten ist dabei entgegengesetzt zu wählen, so dass die Feldlinien im Bereich der Empfängerspuren 1.1, 1.2 jeweils identisch orientiert sind.

Der auf Abtastleiterplatte 1 montierte ASIC-Baustein 3 arbeitet nicht nur als Auswerteelement, sondern auch als Erregerkontrollelement, unter dessen Kontrolle der Erregerstrom, welcher dann durch die Erregerleiterbahnen 1.3 fließt, erzeugt wird. Durch den Erregerstrom werden in den Empfängerleiterbahnen 1.11, 1.12, 1.13, 1.21, 1.22, 1.23 Spannungen in Abhängigkeit von der Winkelstellung der Teilscheibe 2 induziert, wobei diese Spannungen im Folgenden als Signale S1.11, S1.12, S1.13, S1.21, S1.22, S1.23 bezeichnet werden.

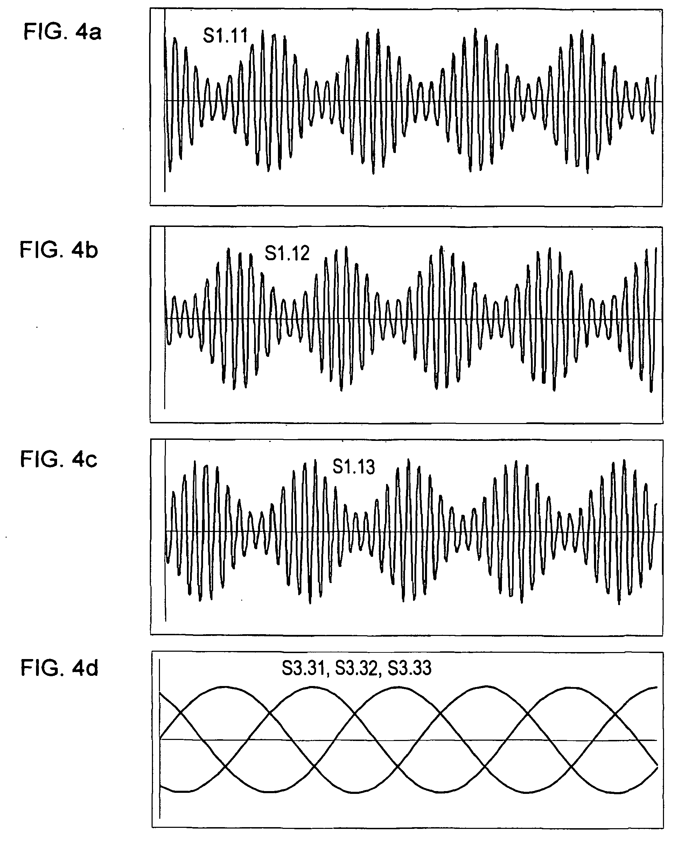

In den Figuren 4a bis 4c ist nur der Verlauf der hochfrequenten empfangenen Signale S1.11, S1.12, S1.13 der inneren Empfängerspur 1.1 dargestellt. Entsprechend der Anordnung der inneren Empfängerspur 1.1 und der inneren Teilungsspur 2.1 wird hier pro Umdrehung, also bei einem Drehwinkel bzw. einer Relativbewegung von 2π (360°), in einer Empfängerleiterbahn 1.11, 1.12, 1.13 eine Signalperiode erzeugt.

Die drei äußeren Empfängerleiterbahnen 1.21, 1.22, 1.23 weisen jeweils sechzehn, also 2⁴, Windungen auf, so dass mit den äußeren Empfängerleiterbahnen 1.21, 1.22, 1.23 ein vergleichsweise hoch auflösendes Inkrementalsignal bei der Relativbewegung der Teilscheibe 2 gegenüber der Abtastleiterplatte 1 erzeugt werden kann. Innerhalb einer Relativbewegung von einer Umdrehung (Drehwinkel von 360°) relativ zum Trägerkörper, liefem die Empfängerleiterbahnen 1.21, 1.22, 1.23 jeweils sechzehn Signalperioden bei der Abtastung der Teilungsspur 2.2. Die drei induzierten und amplitudenmodulierten Signale S1.21, S1.22, S1.23 entsprechen prinzipiell im Verlauf denen der Figuren 4a bis 4c.

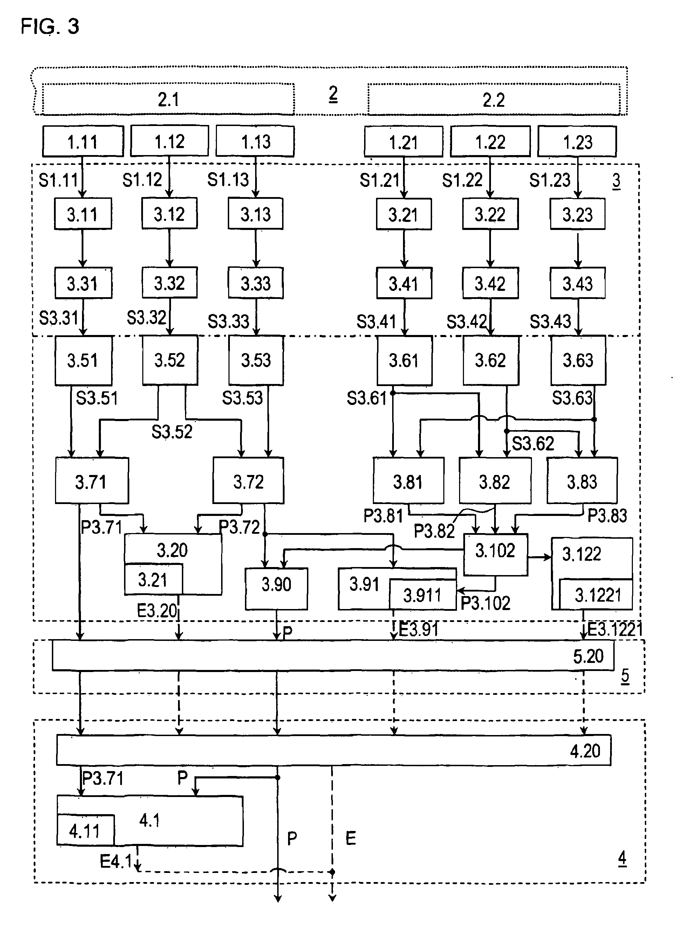

Die Signale S1.11, S1.12, S1.13, S1.21, S1.22, S1.23 werden, gemäß der Figur 3, getrennt zunächst jeweils einer Verstärkerschaltung 3.11, 3.12, 3.13, 3.21, 3.22, 3.23 des ASIC-Bausteins 3 zugeführt, wo die analogen Signale S1.11, S1.12, S1.13, S1.21, S1.22, S1.23 verstärkt werden.

Sodann werden die verstärkten Signale S1.11, S1.12, S1.13, S1.21, S1.22, S1.23 jeweils zu einem Demodulator 3.31, 3.32, 3.33, 3.41, 3.42, 3.43 geleitetet, wo Signale S3.31, S3.32, S3.33, S3.41, S3.42, S3.43 gebildet werden, welche die niederfrequenten phasengerichteten Amplituden der verstärkten Signale S1.11, S1.12, S1.13, S1.21, S1.22, S1.23 sind. In der Figur 4d sind die Signale S3.31, S3.32, S3.33 in einem Diagramm dargestellt. Durch die versetzte Anordnung der Empfängerleiterbahnen 1.11, 1.12, 1.13, 1.21, 1.22, 1.23 entstehen im Betrieb des Positionssensors pro Empfängerspur 1.1, 1.2 drei induzierte Spannungsverläufe deren phasengerichtete Amplituden bzw. Nutzsignale jeweils eine Phasenverschiebung von 120° zueinander aufweisen.

Gegebenenfalls können die Signale S3.31, S3.32, S3.33, S3.41, S3.42, S3.43 nochmals verstärkt werden, bevor sie Analog-Digital-Wandlem 3.51, 3.52, 3.53, 3.61, 3.62, 3.63 zugeführt werden. Dort werden digitale Signale S3.51, S3.52, S3.53, S3.61, S3.62, S3.63 erzeugt. Entsprechend werden also pro Empfängerspur 1.1, 1.2 drei digitale Signale S3.51, S3.52, S3.53, S3.61, S3-62, S3.63 gebildet. Somit umfasst also der ASIC-Baustein 3 einen Analogteil (oberhalb der strichpunktierten Line in Figur 3) und einen Digitalteil (unterhalb der strichpunktierten Line in Figur 3).

Der ASIC-Baustein 3 kann so ausgestaltet sein, dass die digitalen Signale S3.51, S3.52, S3.53, S3.61, S3.62, S3.63 einer Überprüfungsroutine unterzogen werden. Beispielsweise kann überprüft werden, ob die Summe der Signale S3.51, S3.52, S3.53 oder der Signale S3.61, S3.62, S3.63 signifikant von Null abweicht, oder ob mehr als eines der Signale S3.51, S3.52, S3.53 bzw. S3.61, S3.62, S3.63 den Wert Null angenommen hat. Falls dies der Fall ist kann eine Fehlermeldung erzeugt werden. Die Einrichtungen zur Durchführung dieser optionalen Überprtifungsroutinen sind im Übrigen in der Figur 3 nicht dargestellt. Im Allgemeinen kann zur Fehlerüberwachung eine Überprüfung der Phasenbeziehung der S3.51, S3.52, S3.53 bzw. S3.61, S3.62, S3.63 vorgenommen werden.

In logischen Schaltungen 3.71, 3.72 auf dem Digitalteil des ASIC-Bausteins 3 werden durch Kombination der drei digitalen Signale S3.51, S3.52, S3.53, die auf den Signalen S3.31, S3.32, S3.33 basieren und aus der Abtastung der relativ groben Teilungsspur 2.1 resultieren, zwei voneinander unabhängige Positionswerte P3.71, P3.72 ermittelt, bzw. berechnet. Die Berechnung basiert beispielsweise auf einer Koordinatentransformation, durch welche die digitalen Signale S3.51, S3.52, S3.53 zunächst in ein kartesisches Koordinatensystem überführt werden und dann nach herkömmlichen Verfahren ausgewertet werden. Insbesondere werden aus den Signalen S3.51 (0°) und S3.52 (120°) der Positionswert P3.71, aus den Signalen S3.52 (120°) und S3.53 (240°) der Positionswert P3.72, gebildet. Jeder Positionswert P3.71, P3.72 stellt also eine Positionsinformation innerhalb einer Umdrehung der Teilscheibe 2 um die Drehachse R dar. Im Idealfall würden die Positionswerte P3.71, P3.72 folglich jeweils den gleichen Wert annehmen. Durch zwangsläufig auftretende Fertigungs- und Montagetoleranzen sowie durch wechselnde Umwelteinflüsse werden die Positionswerte P3.71, P3.72, wenn auch nur geringfügig, voneinander abweichen. Derartige Abweichungen werden im Vergleicher 3.20 ermittelt und mit einem vorgegebenen Grenzwert verglichen, welcher in einem Speicher 3.21 abgelegt ist. Für den Fall, dass eine Abweichung größer ist als der Grenzwert, wird eine Fehlermeldung E3.20 ausgegeben.

Analog zur Bildung der vergleichsweise groben Positionswerte P3.71, P3.72 wird auch die wesentlich feinere Positionsinformation aus den drei digitalen Signalen S3.61, S3.62, S3.63 elektronisch verarbeitet, wobei in logischen Schaltungen 3.81, 3.82, 3.83 ebenso drei voneinander unabhängig ermittelte Positionswerte P3.81, P3.82, P3.83 berechnet werden, die dann in einem Mittelwertbildner 3.102 zu einem Mittelwert P3.102 verarbeitet werden. Durch die Bildung des Mittelwerts P3.102 wird ein überaus exaktes Messergebnis erreicht, das zudem weitgehend frei von Oberschwingungen der dritten Ordnung ist. Somit wird erreicht, dass der Einfluss von Abstandsschwankungen zwischen der Abtastleiterplatte 1 und der Teilungsscheibe 2 auf das Messergebnis minimiert wird. Der Mittelwert P3.102 und die drei Positionswerte P3.81, P3.82, P3.83 werden an ein Vergleichselement 3.122 weitergeleitet, welches einen Speicher 3.1221 aufweist, in dem ein Wert für die zulässige Abweichung zwischen dem Mittelwert P3.102 und jedem einzelnen der Positionswerte P3.81, P3.82, P3.82 hinterlegt ist. Sobald im Vergleichselement 3.122 eine unzulässig hohe Abweichung bestimmt wird, wird eine Fehlermeldung E3.122 ausgegeben.

In der Anschlussschaltung 3.90 wird der Anschluss des feinen Mittelwerts P3.102 mit dem vergleichsweise groben Positionswert P3.72 vorgenommen, so dass im Ergebnis ein hochauflösender absoluter Positionswert P bezüglich der Winkelstellung von der Anschlussschaltung 3.90 erzeugt wird.

Um gesteigerte sicherheitstechnische Ansprüche zu erfüllen, wird weiterhin in einer Anschtussüberwachungseinheit 3.91 der Anschluss des feinen Mittelwerts P3.102 mit dem Positionswert P3.72 auf Plausibilität überprüft. Zu diesem Zweck wird der Unterschied zwischen dem Mittelwert P3.102 und dem Positionswert P3.72 ermittelt. Ebenso wird aus einem Speicher 3.911 ein Grenzwert ausgelesen, der mit dem ermittelten Unterschied verglichen wird. Sobald in der Anschlussüberwachungseinheit 3.91 ein unzulässig großer Unterschied festgestellt wird, wird eine Fehlermeldung E3.91 ausgegeben.

Die möglicherweise auftretenden Fehlermeldungen des Vergleichers 3.20, der Anschlussüberwachungseinheit 3.91 und des Vergleichselements 3.122 werden an den Schnittstellenbaustein 5 weitergeleitet. Dort werden die Werte entsprechend einem gewünschten Übertragungsprotokoll weiterverarbeitet und über den Steckverbinder 5.1 und ein Kabel an eine Folgeelektronik 4 übertragen.

Die Folgeelektronik 4 kann beispielsweise eine Numerische Steuerung einer Maschine sein, wobei die Folgeelektronik 4 einen weiteren Schnittstellenbaustein 4.20 und einen Vergleicher 4.1 umfasst. Der übertragene Positionswert P3.71 und der übertragene absolute Positionswert P3.102 werden vom Schnittstellenbaustein 4.20 der Folgeelektronik 4 umgewandelt und dem Vergleicher 4.1 zugeführt. Um sicherzustellen, dass während der Datenübertragung keine Fehler aufgetreten sind, wird im Vergleicher 4.1 nochmals eine Überprüfung vorgenommen. Nun wird der übertragene Positionswert P3.71 mit dem übertragenen absoluten Positionswert P3.102 verglichen, wobei auch hier die Abweichung der Positionswerte P3.71, P3.102 mit einem vorgegeben Grenzwert, der in einem Speicher 4.11 hinterlegt ist, verglichen wird. Sobald im Vergleicher 4.1 eine unzulässig große Abweichung bestimmt wird, wird eine Fehlermeldung E4.1 ausgegeben. Die Folgeelektronik 4 gibt also die Fehlermeldung E aus, wenn diese zumindest eine der Fehlermeldung E3.20, E3.91 oder E3.1221 vom ASIC-Baustein 3 des Positionssensors erhalten hat, oder wenn die Fehlermeldung E4.1 vom Vergleicher 4.1 in der Folgeelektronik 4 erzeugt wurde.

Das vorgestellte Messsystem hat insbesondere den Vorteil, dass es höchsten Sicherheitsanforderungen genügt. Denn die digitalen Signale S3.51, S3.52, S3.53, S3.61, S3.62, S3.63 basieren auf den analogen Signalen S1.11, S1.12, S1.13; S1.21, S1.22, S1.23, die auf voneinander unabhängigen Singalpfaden geleitet werden. Dadurch, dass die Empfängerspuren 1.1; 1.2 jeweils drei Empfängerleiterbahnen 1.11, 1.12, 1.13; 1.21, 1.22, 1.23 umfassen, durch die Signale S1.11, S1.12, S1.13; S1.21, S1.22, S1.23 detektierbar sind, deren relative Phasenverschiebungen mit 120° jeweils von n·90° abweicht (mit n als natürlicher Zahl) wird die Sicherheit weiterhin erhöht. So ist bei dieser Anordnung beispielsweise sofort erkennbar, ob eine der Empfängerleiterbahnen 1.11, 1.12, 1.13; 1.21, 1.22, 1.23 auf Grund eines Defekts ausgefallen ist.

Ein weiterer Aspekt bezüglich der hohen Sicherheit des Messsystems liegt darin, dass ein Vergleich der Positionswerte P3.71, P erst nach erfolgter Datenübertragung in der Folgeelektronik 4 vorgenommen wird. Auf diese Weise können auch noch Fehler, die erst durch die Datenübertragung erzeugt wurden, erkannt und durch Abgabe einer entsprechenden Fehlermeldung E behandelt werden.

## Patentansprüche

1. Induktiver Positionssensor, umfassend
· eine Abtastleiterplatte (1), auf der
- eine Erregerleiterbahn (1.3), und
- eine Empfängerspur (1.1; 1.2) mit mehreren Empfängerleiterbahnen (1.11, 1.12, 1.13; 1.21, 1.22, 1.23) angeordnet sind, sowie
· ein Teilungselement (2), welches relativ zur Abtastleiterplatte (1) verschieblich oder drehbar ist und eine Teilungsspur (2.1, 2.2) umfasst, die aus alternierend angeordneten, elektrisch leitfähigen und nichtleitfähigen Teilungsbereichen (2.11, 2.12; 2.21, 2.22) besteht, sowie
· eine elektronische Schaltung (3), **dadurch gekennzeichnet, dass**
die Empfängerspur (1.1; 1.2) drei Empfängerleiterbahnen (1.11, 1.12, 1.13; 1.21, 1.22, 1.23) umfasst, welche so angeordnet sind, dass bei einer Relativbewegung zwischen dem Teilungselement (2) und der Abtastleiterplatte (1) in den Empfängerleiterbahnen (1.11, 1.12, 1.13; 1.21, 1.22, 1.23) der Empfängerspur (1.1; 1.2) Signale (S1.11, S1.12, S1.13; S1.21, S1.22, S1.23) detektierbar sind, wobei eine Phasenverschiebung zumindest zwischen einem Paar dieser Signale (S1.11, S1.12, S1.13; S1.21, S1.22, S1.23) von n·90° abweicht, mit n als natürlicher Zahl, und
die elektronische Schaltung (3) so konfiguriert ist, dass aus den von den Empfängerleiterbahnen (1.11, 1.12, 1.13; 1.21, 1.22, 1.23) der Empfängerspur (1.1; 1.2) detektierten Signalen (S1.11, S1.12, S1.13; S1.21, S1.22, S1.23) zunächst drei digitale Signale (S3.51, S3.52, S3.53; S3.61, S3.62,.S3.63) erzeugbar sind, wobei
durch Kombination der drei digitalen Signale (S3.51, S3.52, S3.53; S3.61, S3.62, S3.63) zumindest zwei Positionswerte (P, P3.71, P3.72; P3.81, P3.82, P3.83) ermittelbar sind, und
die Positionswerte (P, P3.71, P3.72; P3.81, P3.82, P3.83) einem Vergleicher (3.20, 4.1) zuführbar sind.

2. Induktiver Positionssensor gemäß dem Anspruch 1, **dadurch gekennzeichnet, dass**
- auf der Abtastleiterplatte (1) die erste Empfängerspur (1.1) und eine zweite Empfängerspur (1.2) mit mehreren Empfängerleiterbahnen (1.11, 1.12, 1.13; 1.21, 1.22, 1.23) angeordnet sind, und
- das Teilungselement (2) die erste Teilungsspur (2.1) und eine zweite Teilungsspur (2.2) umfasst, wobei
bei gleicher Relativbewegung zwischen der Abtastleiterplatte (1) und dem Teilungselement (2) durch die Empfängerleiterbahnen (1.11, 1.12, 1.13) der ersten Empfängerspur (1.1) eine geringere Anzahl von Signalperioden erzeugbar ist als durch die Empfängerleiterbahnen (1.21, 1.22, 1.23) der zweiten Empfängerspur (1.2).

3. Induktiver Positionssensor gemäß dem Anspruch 1 oder 2, **dadurch gekennzeichnet, dass** die elektronische Schaltung (3) so konfiguriert ist, dass die Positionswerte (P3.81, P3.82, P3.83) einem Mittelwertbildner (3.102) zuführbar sind.

4. Induktiver Positionssensor gemäß dem Anspruch 3, **dadurch gekennzeichnet, dass**
die elektronische Schaltung (3) so konfiguriert ist, dass aus den von den Empfängerleiterbahnen (1.21, 1.22, 1.23) der zweiten Empfängerspur (1.2) detektierten Signalen (S1.21, S1.22, S1.23) zunächst drei digitale Signale (S3.61, S3.62, S3.63) erzeugbar sind, wobei
durch Kombination der drei digitalen Signale (S3.61, S3.62, S3.63) zumindest zwei Positionswerte (P3.81, P3.82, P3.83) ermittelbar sind, und
die Positionswerte (P3.81, P3.82, P3.83) einem Mittelwertbildner (3.102) zuführbar sind.

5. Induktiver Positionssensor gemäß dem Anspruch 3 oder 4, **dadurch gekennzeichnet, dass** die elektronische Schaltung (3) so konfiguriert ist, dass der durch den Mittelwertbildner (3.102) erzeugte Mittelwert einem Vergleichselement (3.122) zuführbar ist.

6. Induktiver Positionssensor gemäß einem der vorhergehenden Ansprüche, **dadurch gekennzeichnet, dass** bei einer Relativbewegung zwischen dem Teilungselement (2) und der Abtastleiterplatte (1) in den Empfängerleiterbahnen (1.11, 1.12, 1.13; 1.21, 1.22, 1.23) der Empfängerspur (1.1; 1.2) Signale (S1.11, S1.12, S1.13; S1.21, S1.22, S1.23) detektierbar sind, deren Phasenverschiebungen jeweils 60° oder 120° betragen.

7. Verfahren zum Betrieb eines induktiven Positionssensors, umfassend
· eine Abtastleiterplatte (1), auf der
- eine Erregerleiterbahn (1.3), und
- eine Empfängerspur (1.1; 1.2) mit mehreren Empfängerleiterbahnen (1.11, 1.12, 1.13; 1.21, 1.22, 1.23) angeordnet sind, sowie
· ein Teilungselement (2), welches relativ zur Abtastleiterplatte (1) verschieblich oder drehbar ist und eine Teilungsspur (2.1, 2.2) umfasst, die aus alternierend angeordneten, elektrisch leitfähigen und nichtleitfähigen Teilungsbereichen (2.11, 2.12; 2.21, 2.22) besteht, **dadurch gekennzeichnet, dass**
· bei einer Relativbewegung zwischen dem Teilungselement (2) und der Abtastleiterplatte (1) in den Empfängerleiterbahnen (1.11, 1.12, 1.13; 1.21, 1.22, 1.23) der Empfängerspur (1.1; 1.2) Signale (S1.11, S1.12, S1.13; S1.21, S1.22, S1.23) detektiert werden, wobei eine Phasenverschiebung zumindest zwischen einem Paar dieser Signale (S1.11, S1.12, S1.13; S1.21, S1.22, S1.23) von n·90° abweicht, mit n als natürlicher Zahl, und
· durch eine elektronische Schaltung (3) aus den von den Empfängerleiterbahnen (1.11, 1.12, 1.13; 1.21, 1.22, 1.23) der Empfängerspur (1.1; 1.2) detektierten Signale (S1.11, S1.12, S1.13; S1.21, S1.22, S1.23) zunächst drei digitale Signale (S3.51, S3.52, S3.53; S3.61, S3.62, S3.63) erzeugt werden und
· die drei digitalen Signale (S3.51, S3.52, S3.53; S3.61, S3.62, S3.63) derart kombiniert werden, so dass zumindest zwei Positionswerte (P, P3.71, P3.72; P3.81, P3.82, P3.83) ermittelt werden, und dann
· die Positionswerte (P, P3.71, P3.72; P3.81, P3.82, P3.83) miteinander verglichen werden, wobei bei einer Abweichung der Positionswerte (P, P3.71, P3.72; P3.81, P3.82, P3.83), die einen vorgegebenen Grenzwert überschreitet, eine Fehlermeldung (E3.20, E3.91, E3.1221, E4.1, E) ausgegeben wird.

8. Verfahren zum Betrieb eines induktiven Positionssensors gemäß dem Anspruch 7, **dadurch gekennzeichnet, dass**
- auf der Abtastleiterplatte (1) die erste Empfängerspur (1.1) und eine zweite Empfängerspur (1.2) mit mehreren Empfängerleiterbahnen (1.11, 1.12, 1.13; 1.21, 1.22, 1.23) angeordnet sind, und
- das Teilungselement (2) die erste Teilungsspur (2.1) und eine zweite Teilungsspur (2.2) umfasst, wobei
bei gleicher Relativbewegung zwischen der Abtastleiterplatte (1) und dem Teilungselement (2) durch die Empfängerleiterbahnen (1.11, 1.12, 1.13) der ersten Empfängerspur (1.1) eine geringere Anzahl von Signalperioden erzeugt werden als durch die Empfängerleiterbahnen (1.21, 1.22, 1.23) der zweiten Empfängerspur (1.2).

9. Verfahren zum Betrieb eines induktiven Positionssensors gemäß dem Anspruch 7 oder 8, **dadurch gekennzeichnet, dass** Positionswerte (P3.81, P3.82, P3.83) einem Mittelwertbildner (3.102) zugeführt werden.

10. Verfahren zum Betrieb eines induktiven Positionssensors gemäß dem Anspruch 9, **dadurch gekennzeichnet, dass** in der elektronischen Schaltung (3) aus den von den Empfängerleiterbahnen (1.21, 1.22, 1.23) der zweiten Empfängerspur (1.2) detektierten Signalen (S1.21, S1.22, S1.23) zunächst drei digitale Signale (S3.61, S3.62, S3.63) erzeugt werden, wobei
durch Kombination der drei digitalen Signale (S3.61, S3.62, S3.63) zumindest zwei Positionswerte (P3.81, P3.82, P3.83) ermittelt werden, und
die Positionswerte (P3.81, P3.82, P3.83) einem Mittelwertbildner (3.102) zugeführt werden.

11. Verfahren zum Betrieb eines induktiven Positionssensors gemäß dem Anspruch 9 oder 10, **dadurch gekennzeichnet, dass** der durch den Mittelwertbildner (3.102) erzeugte Mittelwert einem Vergleichselement (3.122) zugeführt wird.

12. Verfahren zum Betrieb eines induktiven Positionssensors gemäß einem der Ansprüche 7 bis 11, **dadurch gekennzeichnet, dass** bei einer Relativbewegung zwischen dem Teilungselement (2) und der Abtastleiterplatte (1) in den Empfängerleiterbahnen (1.11, 1.12, 1.13; 1.21, 1.22, 1.23) der Empfängerspur (1.1; 1.2) Signale (S1.11, S1.12, S1.13; S1.21, S1.22, S1.23) detektiert werden, deren Phasenverschiebungen jeweils 60° oder 120° betragen.

13. Messsystem, mit einem Positionssensor gemäß dem Anspruch 1, welches weiterhin eine Datenschnittstelle (5.20, 4.20) und eine Folgeelektronik (4) aufweist, die den Vergleicher (4.1) umfasst, wobei dem Vergleicher (4.1) die zumindest zwei Positionswerte (P, P3.71, P3.72; P3.81, P3.82, P3.83) über die Datenschnittstelle (5.20, 4.20) zuführbar sind.

14. Messsystem gemäß dem Anspruch 13, wobei bei einer Abweichung der zwei Positionswerte (P, P3.71, P3.72; P3.81, P3.82, P3.83), die einen vorgegebenen Grenzwert überschreitet, durch die Folgeelektronik (4) eine Fehlermeldung (E) ausgebbar ist.

15. Messsystem gemäß dem Anspruch 13 oder 14, wobei der
· induktive Positionssensor
- eine Abtastleiterplatte (1), auf der die erste Empfängerspur (1.1) und eine zweite Empfängerspur (1.2) mit mehreren Empfängerleiterbahnen (1.11, 1.12, 1.13; 1.21, 1.22, 1.23) angeordnet sind, und
- ein Teilungselement (2), das die erste Teilungsspur (2.1) und eine zweite Teilungsspur (2.2) aufweist, umfasst und
· die Folgeelektronik (4) eine Anschlussschaltung (3.90) aufweist,
wobei bei gleicher Relativbewegung zwischen der Abtastleiterplatte (1) und dem Teilungselement (2) durch die Empfängerleiterbahnen (1.11, 1.12, 1.13) der ersten Empfängerspur (1.1) eine geringere Anzahl von Signalperioden erzeugbar ist als durch die Empfängerleiterbahnen (1.21, 1.22, 1.23) der zweiten Empfängerspur (1.2), und
die aus den Signalen (S1.11, S1.12, S1.13; S1.21, S1.22, S1.23) der Empfängerleiterbahnen (1.11, 1.12, 1.13; 1.21, 1.22, 1.23) erzeugten digitalen Positionswerte (P3.71, P3.72, P3.102) in der Anschlussschaltung (3.90) zu einem Positionswert (P) kombinierbar sind.

## Claims

1. Inductive position sensor comprising
• a scanning circuit board (1) on which
- an excitation conductor track (1.3) and
- a receiver track (1.1; 1.2) having a plurality of receiver conductor tracks (1.11, 1.12, 1.13; 1.21, 1.22, 1.23) are arranged, and
• a graduation element (2) which is movable or rotatable relative to the scanning circuit board (1) and comprises a graduation track (2.1, 2.2) which consists of alternately arranged, electrically conductive and nonconductive graduation areas (2.11, 2.12; 2.21, 2.22), and
• an electronic circuit (3), **characterized in that**
the receiver track (1.1; 1.2) comprises three receiver conductor tracks (1.11, 1.12, 1.13; 1.21, 1.22, 1.23) which are arranged in such a manner that, in the case of a relative movement between the graduation element (2) and the scanning circuit board (1), signals (S1.11, S1.12, S1.13; S1.21, S1.22, S1.23) can be detected in the receiver conductor tracks (1.11, 1.12, 1.13; 1.21, 1.22, 1.23) of the receiver track (1.1; 1.2), a phase shift at least between one pair of these signals (S1.11, S1.12, S1.13; S1.21, S1.22, S1.23) differing from n·90°, where n is a natural number, and
the electronic circuit (3) is configured in such a manner that three digital signals (S3.51, S3.52, S3.53; S3.61, S3.62, S3.63) can first of all be produced from the signals (S1.11, S1.12, S1.13; S1.21, S1.22, S1.23) detected by the receiver conductor tracks (1.11, 1.12, 1.13; 1.21, 1.22, 1.23) of the receiver track (1.1; 1.2),
at least two position values (P, P3.71, P3.72; P3.81, P3.82, P3.83) being able to be determined by combining the three digital signals (S3.31, S3.52, S3.53; S3.61, S3.62, S3.63), and
the position values (P, P3.71, P3.72; P3.81, P3.82, P3.83) being able to be supplied to a comparator (3.20, 4.1).

2. Inductive position sensor according to Claim 1, **characterized in that**
- the first receiver track (1.1) and a second receiver track (1.2) having a plurality of receiver conductor tracks (1.11, 1.12, 1.13; 1.21, 1.22, 1.23) are arranged on the scanning circuit board (1), and
- the graduation element (2) comprises the first graduation track (2.1) and a second graduation track (2.2), in which case,
in the case of the same relative movement between the scanning circuit board (1) and the graduation element (2), the receiver conductor tracks (1.11, 1.12, 1.13) of the first receiver track (1.1) can produce a smaller number of signal periods than the receiver conductor tracks (1.21, 1.22, 1.23) of the second receiver track (1.2).

3. Inductive position sensor according to Claim 1 or 2, **characterized in that** the electronic circuit (3) is configured in such a manner that the position values (P3.81, P3.82, P3.83) can be supplied to an averager (3.102).

4. Inductive position sensor according to Claim 3, **characterized in that**
the electronic circuit (3) is configured in such a manner that three digital signals (S3.61, S3.62, S3.63) can first of all be produced from the signals (S1.21, S1.22, S1.23) detected by the receiver conductor tracks (1.21, 1.22, 1.23) of the second receiver track (1.2),
at least two position values (P3.81, P3.82, P3.83) being able to be determined by combining the three digital signals (S3.61, S3.62, S3.63), and
the position values (P3.81, P3.82, P3.83) being able to be supplied to an averager (3.102).

5. Inductive position sensor according to Claim 3 or 4, **characterized in that** the electronic circuit (3) is configured in such a manner that the average value produced by the averager (3.102) can be supplied to a comparison element (3.122).

6. Inductive position sensor according to one of the preceding claims, **characterized in that**, in the case of a relative movement between the graduation element (2) and the scanning circuit board (1), signals (S1.11, S1.12, S1.13; S1.21, S1.22, S1.23) can be detected in the receiver conductor tracks (1.11, 1.12, 1.13; 1.21, 1.22, 1.23) of the receiver track (1.1; 1.2), the phase shifts of which signals are each 60° or 120°.

7. Method for operating an inductive position sensor comprising
• a scanning circuit board (1) on which
- an excitation conductor track (1.3) and
- a receiver track (1.1; 1.2) having a plurality of receiver conductor tracks (1.11, 1.12, 1.13; 1.21, 1.22, 1.23) are arranged, and
• a graduation element (2) which is movable or rotatable relative to the scanning circuit board (1) and comprises a graduation track (2.1, 2.2) which consists of alternately arranged, electrically conductive and nonconductive graduation areas (2.11, 2.12; 2.21, 2.22), **characterized in that**,
• in the case of a relative movement between the graduation element (2) and the scanning circuit board (1), signals (S1.11, S1.12, S1.13; S1.21, S1.22, S1.23) are detected in the receiver conductor tracks (1.11, 1.12, 1.13; 1.21, 1.22, 1.23) of the receiver track (1.1; 1.2), a phase shift at least between one pair of these signals (S1.11, S1.12, S1.13; S1.21, S1.22, S1.23) differing from n·90°, where n is a natural number, and
• an electronic circuit (3) first of all produces three digital signals (S3.51, S3.52, S3.53; S3.61, S3.62, S3.63) from the signals (S1.11, S1.12, S1.13; S1.21, S1.22, S1.23) detected by the receiver conductor tracks (1.11, 1.12, 1.13; 1.21, 1.22, 1.23) of the receiver track (1.1; 1.2), and
• the three digital signals (S3.51, 53.52, S3.53; S3.61, S3.62, S3.63) are combined in such a manner that at least two position values (P, P3.71, P3.72; P3.81, P3.82, P3.83) are determined, and
• the position values (P, P3.71, P3.72; P3.81, P3.82, P3.83) are then compared with one another, an error message (E3.20, E3.91, E3.1221, E4.1, E) being output in the event of a difference between the position values (P, P3.71, P3.72; P3.81, P3.82, P3.83) which exceeds a predefined limit value.

8. Method for operating an inductive position sensor according to Claim 7, **characterized in that**
- the first receiver track (1.1) and a second receiver track (1.2) having a plurality of receiver conductor tracks (1.11, 1.12, 1.13; 1.21, 1.22, 1.23) are arranged on the scanning circuit board (1), and
- the graduation element (2) comprises the first graduation track (2.1) and a second graduation track (2.2), in which case,
in the case of the same relative movement between the scanning circuit board (1) and the graduation element (2), the receiver conductor tracks (1.11, 1.12, 1.13) of the first receiver track (1.1) produce a smaller number of signal periods than the receiver conductor tracks (1.21, 1.22, 1.23) of the second receiver track (1.2).

9. Method for operating an inductive position sensor according to Claim 7 or 8, **characterized in that** position values (P3.81, P3.82, P3.83) are supplied to an averager (3.102).

10. Method for operating an inductive position sensor according to Claim 9, **characterized in that** three digital signals (S3.61, S3.62, S3.63) are first of all produced in the electronic circuit (3) from the signals (S1.21, S1.22, S1.23) detected by the receiver conductor tracks (1.21, 1.22, 1.23) of the second receiver track (1.2),
at least two position values (P3.81, P3.82, P3.83) being determined by combining the three digital signals (S3.61, S3.62, S3.63), and
the position values (P3.81, P3.82, P3.83) being supplied to an averager (3.102).

11. Method for operating an inductive position sensor according to Claim 9 or 10, **characterized in that** the average value produced by the averager (3.102) is supplied to a comparison element (3.122).

12. Method for operating an inductive position sensor according to one of Claims 7 to 11, **characterized in that**, in the case of a relative movement between the graduation element (2) and the scanning circuit board (1), signals (S1.11, S1.12, S1.13; S1.21, S1.22, S1.23) are detected in the receiver conductor tracks (1.11, 1.12, 1.13; 1.21, 1.22, 1.23) of the receiver track (1.1; 1.2), the phase shifts of which signals are each 60° or 120°.

13. Measuring system having a position sensor according to Claim 1, which also has a data interface (5.20, 4.20) and downstream electronics (4) comprising the comparator (4.1), the at least two position values (P, P3.71, P3.72; P3.81, P3.82, P3.83) being able to be supplied to the comparator (4.1) via the data interface (5.20, 4.20).

14. Measuring system according to Claim 13, the downstream electronics (4) being able to output an error message (E) in the event of a difference between the two position values (P, P3.71, P3.72; P3.81, P3.82, P3.83) which exceeds a predefined limit value.

15. Measuring system according to Claim 13 or 14, the
• inductive position sensor comprising
- a scanning circuit board (1) on which the first receiver track (1.1) and a second receiver track (1.2) having a plurality of receiver conductor tracks (1.11, 1.12, 1.13; 1.21, 1.22, 1.23) are arranged, and
- a graduation element (2) having the first graduation track (2.1) and a second graduation track (2.2), and
• the downstream electronics (4) having a connection circuit (3.90),
in which case, in the case of the same relative movement between the scanning circuit board (1) and the graduation element (2), the receiver conductor tracks (1.11, 1.12, 1.13) of the first receiver track (1.1) can produce a smaller number of signal periods than the receiver conductor tracks (1.21, 1.22, 1.23) of the second receiver track (1.2), and
the digital position values (P3.71, P3.72, P3.102) produced from the signals (S1.11, S1.12, S1.13; S1.21, S1.22, S1.23) of the receiver conductor tracks (1.11, 1.12, 1.13; 1.21, 1.22, 1.23) being able to be combined in the connection circuit (3.90) to form one position value (P).

## Revendications

1. Détecteur inductif de position comprenant :
une carte (1) de circuit de palpage sur laquelle sont disposés
une piste conductrice d'excitateur (1.3),
un chemin de détecteur (1.1; 1.2) qui présente plusieurs pistes conductrices de récepteur (1.11, 1.12, 1.13; 1.21, 1.22, 1.23),
un élément de division (2) qui peut coulisser ou tourner par rapport à la carte (1) de circuit de palpage et qui comporte un chemin de division (2.1, 2.2) constitué de parties de division (2.11, 2.12; 2.21, 2.22) électriquement conductrices ou électriquement non conductrices disposées en alternance, ainsi que
un circuit électronique (3), **caractérisé en ce que**
le chemin de récepteur (1.1; 1.2) comporte trois pistes conductrices de récepteur (1.11, 1.12, 1.13; 1.21, 1.22, 1.23) disposées de telle sorte qu'en cas de déplacement relatif entre l'élément de division (2) et la carte (1) de circuit de palpage, des signaux (S1.11, S1.12, S1.13; S1.21, S1.22, S1.23) peuvent être détectés dans les pistes conductrices de récepteur (1.11, 1.12, 1.13; 1.21, 1.22, 1.23) du chemin de récepteur (1.1; 1.2), le déphasage entre au moins deux de ces signaux (S1.11, S1.12, S1.13; S1.21, S1.22, S1.23) étant différent de n.90°, n étant un nombre naturel,
**en ce que** le circuit électronique (3) est configuré de telle sorte que trois signaux numériques (S3.51, S3.52, S3.53; S3.61, S3.62, S3.63) peuvent d'abord être formés à partir des signaux (S1.11, S1.12, S1.13; S1.21, S1.22, S1.23) détectés par les pistes conductrices de récepteur (1.11, 1.12, 1.13; 1.21, 1.22, 1.23) du chemin de récepteur (1.1; 1.2),
**en ce qu'**au moins deux valeurs de position (P, P3.71, P3.72; P3.81, P3.82, P3.83) peuvent être déterminées par combinaison des trois signaux numériques (S3.51, S3.52, S3.53; S3.61, S3.62, S3.63) et
**en ce que** les valeurs de position (P, P3.71, P3.72; P3.81, P3.82, P3.83) peuvent être apportées à un comparateur (3.20, 4.1).

2. Détecteur inductif de position selon la revendication 1, **caractérisé en ce que** le premier chemin de récepteur (1.1) et un deuxième chemin de récepteur (1.2) qui présentent plusieurs pistes conductrices de récepteur (1.11, 1.12, 1.13; 1.21, 1.22, 1.23) sont disposés sur la carte (1) de circuit de palpage et **en ce que** l'élément de division (2) comporte le premier chemin de division (2.1) et un deuxième chemin de division (2.2), le nombre de périodes de signal qui peuvent être formées lors d'un même déplacement relatif entre la carte (1) de circuit de palpage et l'élément de division (2) par les pistes conductrices de récepteur (1.11, 1.12, 1.13) du premier chemin de récepteur (1.1) étant plus petit que celui formé par les pistes conductrices de récepteur (1.21, 1.22, 1.23) du deuxième chemin de récepteur (1.2).

3. Détecteur inductif de position selon les revendications 1 ou 2, **caractérisé en ce que** le circuit électronique (3) est configuré de telle sorte que les valeurs de position (P3.81, P3.82, P3.83) peuvent être apportées à un moyen (3.102) de formation de valeurs moyennes.

4. Détecteur inductif de position selon la revendication 3, **caractérisé en ce que** le circuit électronique (3) est configuré de telle sorte que trois signaux numériques (S3.61, S3.62, S3.63) peuvent d'abord être formés à partir des signaux (S1.21, S1.22, S1.23) détectés par les pistes conductrices de récepteur (1.21, 1.22, 1.23) du deuxième chemin de récepteur (1.2), **en ce qu'**au moins deux valeurs de position (P3.81, P3.82, P3.83) peuvent être déterminées par combinaison des trois signaux numériques (S3.61, S3.62, S3.63) et **en ce que** les valeurs de position (P3.81, P3.82, P3.83) peuvent être apportées à un moyen (3.102) de formation de valeurs moyennes.

5. Détecteur inductif de position selon les revendications 3 ou 4, **caractérisé en ce que** le circuit électronique (3) est configuré de telle sorte que la valeur moyenne formée par le moyen (3.102) de formation de valeurs moyennes peut être apporté à un élément comparateur (3.122).

6. Détecteur inductif de position selon l'une des revendications précédentes, **caractérisé en ce qu'**en cas de déplacement relatif entre l'élément de division (2) et la carte (1) de circuit de palpage, des signaux (S1.11, S1.12, S1.13; S1.21, S1.22, S1.23) dont les déphasages sont chaque fois de 60° ou de 120° peuvent être détectés dans les pistes conductrices de récepteur (1.11, 1.12, 1.13; 1.21, 1.22, 1.23) du chemin de récepteur (1.1; 1.2).

7. Procédé d'utilisation d'un détecteur inductif de position comportant
une carte (1) de circuit de palpage sur laquelle sont disposés
une piste conductrice d'excitateur (1.3),
un chemin de détecteur (1.1; 1.2) qui présente plusieurs pistes conductrices de récepteur (1.11, 1.12, 1.13; 1.21, 1.22, 1.23),
un élément de division (2) qui peut coulisser ou tourner par rapport à la carte (1) de circuit de palpage et qui comporte un chemin de division (2.1, 2.2) constitué de parties de division (2.11, 2.12; 2.21, 2.22) électriquement conductrices ou électriquement non conductrices disposées en alternance, **caractérisé en ce que**
en cas de déplacement relatif entre l'élément de division (2) et la carte (1) de circuit de palpage, des signaux (S1.11, S1.12, S1.13; S1.21, S1.22, S1.23) sont détectés dans les pistes conductrices de récepteur (1.11, 1.12, 1.13; 1.21, 1.22, 1.23) du chemin de récepteur (1.1; 1.2), le déphasage entre au moins deux de ces signaux (S1.11, S1.12, S1.13; S1.21, S1.22, S1.23) étant différent de n.90°, n étant un nombre naturel,
**en ce que** trois signaux numériques (S3.51, S3.52, S3.53; S3.61, S3.62, S3.63) sont d'abord formés par un circuit électronique (3) à partir des signaux (S1.11, S1.12, S1.13; S1.21, S1.22, S1.23) détectés par les pistes conductrices de récepteur (1.11, 1.12, 1.13; 1.21; 1.22, 1.23) du chemin de récepteur (1.1; 1.2),
**en ce que** les trois signaux numériques (S3.51, S3.52, S3.53; S3.61, S3.62, S3.63) sont combinés de telle sorte qu'au moins deux valeurs de position (P, P3.71, P3.72; P3.81, P3.82, P3.83) sont déterminées,
**en ce qu'**ensuite les valeurs de position (P, P3.71, P3.72; P3.81, P3.82, P3.83) sont comparées les unes aux autres et **en ce qu'**au cas où l'écart constaté entre la valeur de position (P, P3.71, P3.72; P3.81, P3.82, P3.83) dépasse une valeur limite prédéterminée, un message d'erreur (E3.20, E3.91, E3.1221, E4.1, E) est délivré.

8. Procédé d'utilisation d'un détecteur inductif de position selon la revendication 7, **caractérisé en ce que** le premier chemin de récepteur (1.1) et un deuxième chemin de récepteur (1.2) qui présentent plusieurs pistes conductrices de récepteur (1.11, 1.12, 1.13; 1.21, 1.22, 1.23) sont disposés sur la carte (1) de circuit de palpage et **en ce que** l'élément de division (2) comporte le premier chemin de division (2.1) et un deuxième chemin de division (2.2), le nombre de périodes de signal qui peut être formées lors d'un même déplacement relatif entre la carte (1) de circuit de palpage et l'élément de division (2) par les pistes conductrices de récepteur (1.11, 1.12, 1.13) du premier chemin de récepteur (1.1) étant plus petit que celui formé par les pistes conductrices de récepteur (1.21, 1.22, 1.23) du deuxième chemin de récepteur (1.2).

9. Procédé d'utilisation d'un détecteur inductif de position selon les revendications 7 ou 8, **caractérisé en ce que** les valeurs de position (P3.81, P3.82, P3.83) sont apportées à un moyen (3.102) de formation de valeurs moyennes.

10. Procédé d'utilisation d'un détecteur inductif de position selon la revendication 9, **caractérisé en ce que** trois signaux numériques (S3.61, S3.62, S3.63) sont d'abord formés dans le circuit électronique (3) à partir des signaux (S1.21, S1.22, S1.23) détectés par les pistes conductrices de récepteur (1.21, 1.22, 1.23) du deuxième chemin de récepteur (1.2), **en ce qu'**au moins deux valeurs de position (P3.81, P3.82, P3.83) sont déterminées par combinaison des trois signaux numériques (S3.61, S3.62, S3.63) et **en ce que** les valeurs de position (P3.81, P3.82, P3.83) sont apportées à un moyen (3.102) de formation de valeurs moyennes.

11. Procédé d'utilisation d'un détecteur inductif de position selon les revendications 9 ou 10, **caractérisé en ce que** la valeur moyenne formée par le moyen (3.102) de formation de valeurs moyennes est apportée à un élément comparateur (3.122).

12. Procédé d'utilisation d'un détecteur inductif de position selon l'une des revendications 7 à 11, **caractérisé en ce qu'**en cas de déplacement relatif entre l'élément de division (2) et la carte (1) de circuit de palpage, des signaux (S1.11, S1.12, S1.13; S1.21, S1.22, S1.23) dont les déphasages sont chaque fois de 60° ou de 120° sont détectés dans les pistes conductrices de récepteur (1.11, 1.12, 1.13; 1.21, 1.22, 1.23) du chemin de récepteur (1.1; 1.2).

13. Système de mesure doté d'un détecteur de position selon la revendication 1 et présentant en outre une interface de données (5.20, 4.20) et une électronique de suivi (4) qui comporte le comparateur (4.1), les deux ou plusieurs valeurs de position (P, P3.71, P3.72; P3.81, P3.82, P3.83) pouvant être apportées au comparateur (4.1) par l'interface de données (5.20, 4.20).

14. Système de mesure selon la revendication 13, dans lequel lorsque l'écart entre les deux valeurs de position (P, P3.71, P3.72; P3.81, P3.82, P3.83) dépasse une valeur limite prédéterminée, un message d'erreur (E) peut être délivré par l'électronique de suivi (4).

15. Système de mesure selon les revendications 13 ou 14, dans lequel le détecteur inductif de position comporte une carte (1) de circuit de palpage sur laquelle le premier chemin de récepteur (1.1) et un deuxième chemin de récepteur (1.2) qui présentent plusieurs pistes conductrices de récepteur (1.11, 1.12, 1.1; 1.21, 1.22, 1.23) sont disposés et un élément de division (2) qui présente le premier chemin de division (2.1) et un deuxième chemin de division (2.2) et l'électronique de suivi (4) présente un circuit de raccordement (3.90), le nombre de périodes de signal qui peuvent être formées lors d'un même déplacement relatif entre la carte (1) de circuit de palpage et l'élément de division (2) par les pistes conductrices de récepteur (1.11, 1.12, 1.13) du premier chemin de récepteur (1.1) étant plus petit que celui formé par les pistes conductrices de récepteur (1.21, 1.22, 1.23) du deuxième chemin de récepteur (1.2) et les valeurs numériques de position (P3.71, P3.72, P3.102) formées à partir des signaux (S1.11, S1.12, S1.13; S1.21, S1.22, S1.23) des pistes conductrices de récepteur (1.11, 1.12, 1.13; 1.21, 1.22, 1.23) pouvant être combinées en une valeur de position (P) dans le circuit de raccordement (3.90).
